# EUROPÄISCHE PATENTSCHRIFT

(11) **EP 0 835 680 B1**
(45) Veröffentlichungstag und Bekanntmachung des Hinweises auf die Patenterteilung: **02.04.2003**
(21) Anmeldenummer: 96810675.7
(22) Anmeldetag: 09.10.1996
(51) Int. Cl.: B01D 3/14, B01D 3/04, B01D 1/28, B01D 3/00, C01B 15/013

(54) **Destillationsanlage**
Distillation apparatus
Installation de distillation

(43) Veröffentlichungstag der Anmeldung: 15.04.1998
(73) Patentinhaber: Sulzer Chemtech AG, 8404 Winterthur (CH)
(72) Erfinder: Meili, Albert, 8442 Hettlingen (CH)
(74) Vertreter: Sulzer Management AG

(56) Entgegenhaltungen:
- EP-A- 0 419 406
- DE-B- 1 114 168
- DE-C- 340 708
- FR-A- 2 479 701
- US-A- 4 217 176
- US-A- 4 626 321

## Beschreibung

Die Erfindung betrifft eine Destillationsanlage gemäss Oberbegriff von Anspruch 1 und eine Verwendung der Anlage.

Eine derartige Anlage ist in der EP-A 0 419 406 im Zusammenhang mit einer Herstellung von konzentriertem Wasserstoff-Peroxid H₂O₂ beschrieben. Diese bekannte Anlage zeichnet sich dadurch aus, dass ein geringer Druckabfall zwischen Sumpf und Kopf der Destillationskolonne vorliegt und damit relativ tiefe Betriebs- und Maximaltemperaturen eine verbesserte Sicherheit der Anlage bieten. Aufgabe der vorliegenden Erfindung ist es, die bekannte Anlage weiter zu entwickeln. Dabei soll insbesondere bei der Verwendung von Wärmepumpen eine Reduktion der Energiekosten erzielbar sein. Diese Aufgabe wird durch eine Anlage gelöst, wie sie in Anspruch 1 und insbesondere in Anspruch 2 definiert ist.

Die Ansprüche 3 bis 9 beziehen sich auf vorteilhafte Ausführungsformen der erfindungsgemässen Destillationsanlage. Gegenstand des Anspruchs 10 ist eine Anlage zur Herstellung von konzentriertem Wasserstoff-Peroxid.

Bei einer Destillation kann zur Energieeinsparung ein Teil der am Kopf der Kolonne anfallenden Wärmeenergie durch eine Wärmepumpe auf ein höheres Temperaturniveau gebracht und die so transformierte Wärmeenergie für die Beheizung eines Sumpfverdampfers genutzt werden. Dabei kann eine direkte Brüdenverdichtung angewendet oder ein Dampfstrahlverdichter wie auch jede andere Art von Wärmepumpe verwendet werden.

Je grösser die Temperaturdifferenz zwischen der Wärmesenke des Sumpfs und der Wärmequelle des Kopfs der Kolonne ist, desto tiefer ist der Wirkungsgrad der Wärmepumpe und folglich desto höher ist der spezifische Energiebedarf. Die Kolonne kann erfindungsgemäss mit zwei oder einer grösseren Anzahl Verdampfern auf verschiedenen Temperaturniveaus ausgerüstet sein. Die Energie der Wärmequelle muss dabei nur teilweise auf das für den Sumpfverdampfer benötigte Temperaturniveau transformiert werden. Der Rest der für die Verdampfer benötigten Wärmeenergie muss lediglich auf tiefere Temperaturniveaus der weiteren Wärmesenken angehoben werden, wobei sich eine beträchtliche Reduktion der für den Antrieb der Wärmepumpe erforderlichen Energie ergibt.

Beispielsweise bei der Herstellung von konzentriertem Wasserstoff-Peroxid H₂O₂ ist bei der Anwendung einer direkten Brüdenverdichtung mittels eines zweistufigen Radialverdichters und der Verwendung eines optimal abgestimmten Zwischenverdampfers eine Antriebsleistung von 1200 kW nötig. Diese Leistung ist um 300 kW kleiner als die Verdichterantriebsleistung bei der bekannten Anlage, die ebenfalls einen zweistufigen Radialverdichter aufweist. Bei einer Variante mit Dampfstrahlverdichter reduziert sich die Treibdampfmenge von 12 000 kg/h auf knapp 10 000 kg/h.

Dank der erfindungsgemässen Weiterentwicklung der Destillationsanlage werden kleinere Wärmepumpen benötigt. Damit reduzieren sich auch die Investitionskosten.

Die erfindungsgemässe Anlage ist auch geeignet beispielsweise für ein Verfahren mit einer sogenannten Reinstyrolkolonne, in der Schwersieder von Styrol getrennt werden.

Nachfolgend wird die Erfindung anhand der Zeichnungen näher erläutert. Es zeigen:
- Fig. 1: eine erfindungsgemässe Anlage mit einem ersten Verdampfer und einem Zwischenverdampfer,
- Fig. 2: eine Variante zu der Anlage der Fig.1,
- Fig. 3: eine erfindungsgemässe Anlage mit zwei Verflüssigern und
- Fig. 4: eine Destillationskolonne einer erfindungsgemässen Anlage mit zwei Verflüssigern und zwei Verdampfern.

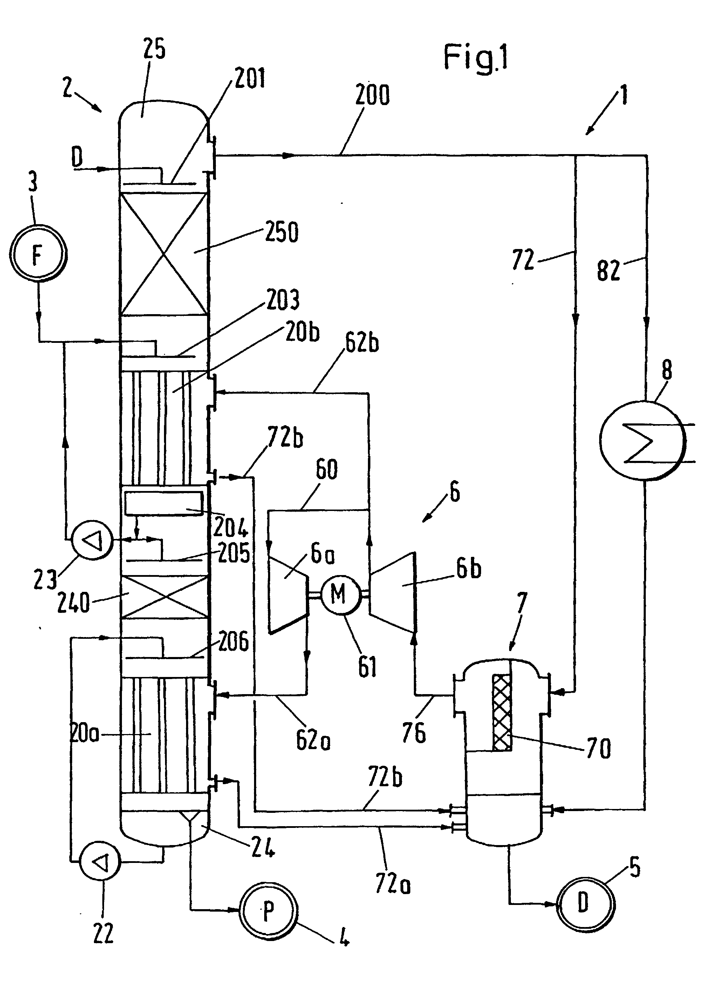

Die Anlage 1 in Fig.1 setzt sich aus einer Destillationskolonne 2, einem Verdichter 6, einem Destillatsammler 7 und einem Kondensator 8 zusammen. Eine Rohlösung F aus dem Reservoir 3 wird in die Kolonne 1 eingespeist und dort in Brüden und ein Produkt P (Reservoir 4) umgesetzt. Die Brüden werden am Kopf 25 der Kolonne 2 abgezogen, das Produkt P aus dem Sumpf 24. Ein grösserer Teil der Brüden wird als Arbeitsmittel einer Wärmepumpe verwendet, die durch den Verdichter 6 angetrieben wird. Die verdichteten Brüden stellen die Wärmequelle für die Destillation dar. Das bei der Wärmeabgabe entstehende Kondensat und das Kondensat, das aus einem unverdichteten Rest der Brüden im Kondensator 8 entsteht, bilden zusammen das Destillat D (Reservoir 5).

Die Kolonne 2 umfasst folgende Komponenten: einen ersten Verdampfer 20a, der unmittelbar über dem Sumpf 24 angeordnet ist; einen Zwischenverdampfer 20b, der oberhalb des ersten Verdampfers 20a und einer unteren Packungssektion 240 angeordnet ist; eine obere Packungssektion 250; einen Verteiler 201 für den Rücklauf (Destillat D oder demineralisiertes Wasser); einen Verteiler 203 für den Zulauf, d.h. für die eingespeiste Rohlösung F, sowie für mit einer Pumpe 23 umgewälzte Lösung; einen Sammler 204 sowie einen Verteiler 205 für die im Verdampfer 20b aufkonzentriert Lösung; ferner einen Verteiler 206 für mit einer Pumpe 22 umgewälztes Produkt P.

Die Komponenten sind derart ausgebildet, dass zwischen dem Sumpf 24 und dem Kopf 25 der Kolonne 2 sich ein geringer Druckabfall einstellt: Fallfilmverdampfer 20a und 20b; Sammler 204 in Form einer bekannten Einrichtung mit Lamellen; geordnete Packungen 240 und 250 (vertikale Lagen mit gewellten Lamellen).

Die am Kopf 25 abgezogenen Brüden gelangen über eine Leitung 200 sowie Leitungen 72 und 82 in den Destillatsammler 7 beziehungsweise in den Kondensator 8. Der grössere Teil der Brüden, der durch einen Tröpfchenabscheider 70 des Destillatsammlers 7 geführt wird, gelangt über eine Leitung 76 in eine erste Stufe 6b des Verdichters 6 (Radialverdichter, angetrieben durch Motor 61), wo die Brüden auf einen Druck verdichtet werden, bei dem eine Kondensation im Zwischenverdampfer 20b eintritt. Ein Teil der zwischenverdichteten Brüden strömt - Leitung 62b - in den Zwischenverdampfer 20b und ein Teil - Leitung 60 - in eine zweite Stufe 6a des Verdichters 6. Der zweite Teil gelangt nach der zweiten Verdichtung über die Leitung 62a in den ersten Verdampfer 20a, wo die Brüden bei einer höheren Temperatur als im Zwischenverdampfer 20b unter Wärmeabgabe auskondensiert werden. Die in den Verdampfern 20a und 20b kondensierten Brüden fliessen über Leitungen 72a und 72b in den Destillatsammler 7 und werden dort auf den Saugdruck des Verdichters entspannt.

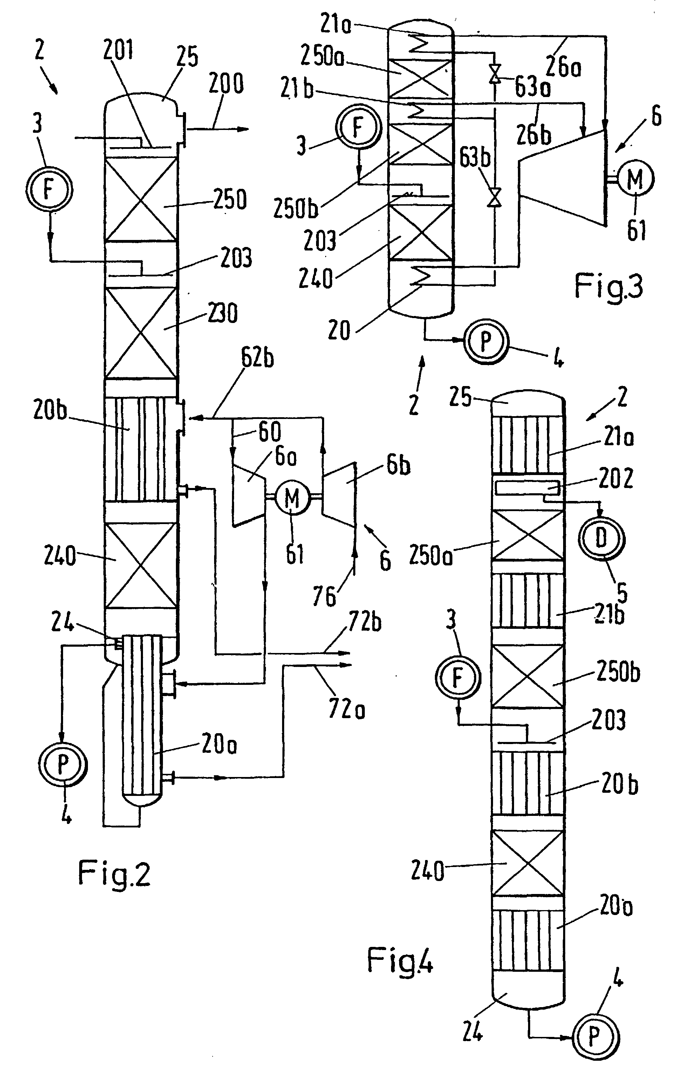

Der erste Verdampfer 20a kann - anders als beim Ausführungsbeispiel der Fig.1 - auch im Sumpf 24 angeordnet sein: siehe Fig.2. Der erste Verdampfer 20a kann dabei als Naturumlauf-, Kletterfilm- oder Steigrohrverdampfer ausgebildet sein. Es ist auch möglich, den Zwischenverdampfer 20b in Form eines der genannten Verdampfertypen auszubilden.

Die Destillationskolonne 2 der Fig.2 zeigt zusätzlich zwischen dem Verteiler 203 des Zulaufs und dem Zwischenverdampfer 20b eine weitere Packungssektion 230. Verschiedene Details, die in Fig.1 zu sehen sind, sind in Fig.2 nicht mehr dargestellt.

Fig.3 zeigt sehr schematisch eine erfindungsgemässe Anlage, in der die Brüden innerhalb der Kolonne mittels eines ersten Verflüssigers 21a auskondensiert werden. Ein Zwischenverflüssiger 21b ist unterhalb des ersten Verflüssigers und einer oberen Packungssektion 250a angeordnet. Eine zweite Packungssektion 250b befindet sich zwischen dem Zwischenverflüssiger 21b und dem Zulaufverteiler 203. Unterhalb der unteren Packungssektion 240 ist in diesem Beispiel nur ein Verdampfer 20 vorgesehen. Hier liegt eine zweistufige Wärmepumpe vor, die einen geschlossenen Kreislauf mit einem Stoff als Arbeitsmittel aufweist, der mit den als Wärmequellen genutzten Verflüssigern 21a und 21b auf zwei Temperaturniveaus - bei verschiedenen Drücken - verdampfbar ist. Entsprechend weist der Verdichter 6 zwei Eingänge und Zuleitungen 26a, 26b für das dampfförmige Arbeitsmittel auf. Das verdichtete Arbeitsmittel gelangt über die Leitung 62 in den einzigen Verdampfer 20 der Destillationskolonne, wo es unter Wärmeabgabe kondensiert wird. Das kondensierte Arbeitsmittel strömt über Drosselorgane 63b und 63b in die beiden Verflüssiger 21b beziehungsweise 21a, wo es unter Wärmeaufnahme verdampft wird.

Fig.4 zeigt schliesslich eine Destillationskolonne 2, in der sowohl zwei Verdampfer 20a und 20b als auch zwei Verflüssiger 21a und 21b angeordnet sind. Unter dem oberen Verflüssiger 21a fängt ein Sammler 202 das Destillat D auf. Die weiteren Komponenten sind bereits anhand der anderen Beispiele beschrieben.

Bei der Verwendung einer Wärmepumpe kann es vorteilhaft sein, nur einen der Verflüssiger 21a und 21b als Wärmequelle oder nur einen der Verdampfer 20a und 20b als Wärmesenke für die Wärmepumpe einzusetzen. Ob dies vorteilhaft ist, hängt von der Verfügbarkeit von weiteren günstigen Mitteln für Heiz- beziehungsweise Kühlzwecke ab, die sich gegebenenfalls bei der Durchführung der Destillation nutzen lassen.

Die erfindungsgemässe Anlage 1 lässt sich besonders vorteilhaft zur Herstellung von konzentriertem Wasserstoff-Peroxid H₂O₂ verwenden, wobei aus einer Rohlösung F, die rund 30 % H₂O₂ enthält, eine Produktlösung P mit 70 % H₂O₂ erzeugbar ist. Das Destillat D ist Wasser, das höchstens 0,01 % H₂O₂ enthält. Die Rohlösung F kann eine andere H₂O₂-Konzentration im Bereich von 25 bis 45 % aufweisen. Gelegentlich genügt es, eine Produktlösung mit 50 oder 60 % H₂O₂ zu erzeugen.

## Patentansprüche

1. Destillationsanlage (1) mit einer Wärmepumpe und mit einer Packungen (240, 250) sowie einen Verdampfer (20a) enthaltenden Kolonne (2), deren Komponenten - auf einer vertikalen Achse angeordnet und zu einer Baueinheit zusammengefasst - derart ausgebildet sind, dass im Betrieb der Anlage zwischen einem Sumpf (24) und einem Kopf (25) der Kolonne sich ein geringer Druckabfall einstellt,
**dadurch gekennzeichnet, dass** mindestens zwei Verdampfer (20a, 20b) vorgesehen sind, nämlich ein erster Verdampfer (20a), der im oder unmittelbar über dem Sumpf angeordnet ist, und ein Zwischenverdampfer (20b), der oberhalb des ersten Verdampfers und einer unteren Packungssektion (240) angeordnet ist; und/oder
dass mindestens zwei Verflüssiger (21a, 21b) vorgesehen sind, nämlich ein erster Verflüssiger (21a), der im Kopf der Kolonne angeordnet ist, und ein Zwischenverflüssiger (21b), der unterhalb des ersten Verflüssigers und einer oberen Packungssektion (250a) angeordnet ist,
wobei die genannten Verdampfer und/oder Verflüssiger Komponenten der Wärmepumpe (25, 6, 20a, 20b; 21a, 21b, 6, 20) sind, die Wärmepumpe eine wärmetransportierende sowie wärmetransformierende Verbindung (200, 72, 62a, 62b) zwischen Kopf (25) und Sumpf (24) herstellt, die Wärmepumpe mindestens zweistufig (6a, 20a / 6b, 20b; 6, 21a, 21b) ausgebildet ist, der erste Verdampfer (20a) und der Zwischenverdampfer (20b) Wärmesenken der Wärmepumpe auf zwei Temperaturniveaus darstellen und/oder der erste Verflüssiger (21b) und der Zwischenverflüssiger (21b) Wärmequellen der Wärmepumpe auf zwei Temperaturniveaus darstellen.

2. Anlage nach Anspruch 1, **dadurch gekennzeichnet, dass** die Wärmepumpe einen mindestens zweistufigen Verdichter (6) umfasst und ein Arbeitsmittel verwendet, das nach einer Dampfverdichtung auf dem Temperaturniveau des oder der Verdampfer (20; 20a, 20b) kondensierbar ist, wobei insbesondere als Verdichter ein zweistufiger Radialverdichter (6a, 6b, 61) vorgesehen ist.

3. Anlage nach Anspruch 2, **dadurch gekennzeichnet, dass** am Kopf (25) der Kolonne (2) entnehmbare Brüden als Arbeitsmittel dienen.

4. Anlage nach Anspruch 2, **dadurch gekennzeichnet, dass** die Wärmepumpe (21a, 21b, 6, 20) in einem geschlossenen Kreislauf einen Stoff als Arbeitsmittel verwendet, der mit dem oder den als Wärmequellen genutzten Verflüssigern (21a, 21b) verdampfbar ist.

5. Anlage nach einem der Ansprüche 1 bis 4, **dadurch gekennzeichnet, dass** mindestens der Zwischenverdampfer (20b) als Fallfilmverdampfer ausgebildet ist.

6. Anlage nach einem der Ansprüche 1 bis 5, **dadurch gekennzeichnet, dass** der erste Verdampfer (20a) als Naturumlauf-, Kletterfilm- oder Steigrohrverdampfer ausgebildet ist.

7. Anlage nach einem der Ansprüche 1 bis 6, **dadurch gekennzeichnet, dass** die Packungen (230, 240, 250, 250a, 250b) oder Packungssektionen geordnet strukturiert sind und insbesondere vertikale Lagen mit gewellten Lamellen aufweisen.

8. Anlage nach einem der Ansprüche 1 bis 7, **dadurch gekennzeichnet, dass** eine Zuführung für ein Rohprodukt (F) mit einem Verteiler (203) über dem oder einem Zwischenverdampfer (20b) angeordnet ist, wobei zwischen dem Verteiler und dem Zwischenverdampfer eine weitere Packungssektion (230) angeordnet sein kann.

9. Verwendung einer Anlage (1) nach einem der Ansprüche 1 bis 8 zur Herstellung von konzentriertem Wasserstoff-Peroxid H₂O₂, insbesondere zur Herstellung einer Produktlösung (P), die rund 70% H₂O₂ enthält, aus einer Rohlösung (F), die rund 30% H₂O₂ enthält.

## Claims

1. Distillation plant (1) with a heat pump and with a column (2) containing packings (240, 250) as well as a vaporiser (20a) with the elements of the column - arranged along a vertical axis and combined into a constructional unit - being executed in such a manner that a slight pressure drop arises during the operation of the plant between a sump (24) and a head (25) of the column, **characterised in that** at least two vaporisers (20a, 20b) are provided, namely a first vaporiser (20a), which is arranged in or directly above the sump, and an intermediate vaporiser (20b) which is arranged above the first vaporiser and a lower packing section (240); and/or **in that** at least two liquefiers (21a, 21b) are provided, namely a first liquefier (21a), which is arranged in the head of the column, and an intermediate liquefier (21b), which is arranged below the first liquefier and an upper packing section (250a), wherein the said vaporisers and/or liquefiers are components of the heat pump (25.6, 20a, 20b; 21a, 21b, 6, 20), wherein the heat pump produces a heat transporting connection as well as a heat transforming connection (200, 72, 62a, 62b) between the head (25) and the sump (24), wherein the heat pump is executed in at least two stages (6a, 20a / 6b, 20b; 6, 21a, 21b), wherein the first vaporiser (20a) and the intermediate vaporiser (20b) represent heat sinks of the heat pump at two temperature levels and/or wherein the first liquefier (21a) and the intermediate liquefier (21b) represent heat sources of the heat pump at two temperature levels.

2. Plant in accordance with claim 1 **characterised in that** the heat pump comprises an at least two-stage compressor (6) and uses a working fluid which can be condensed to a temperature level of the vaporiser or vaporisers (20; 20a, 20b) after a vapour compression, with a two-stage radial compressor (6a, 6b, 61) in particular being provided as the compressor.

3. Plant in accordance with claim 2 **characterised in that** exhaust vapours which can be drawn off at the head (25) of the column (2) serve as the working fluid.

4. Plant in accordance with claim 2 **characterised in that** the heat pump (21a, 21b, 6, 20) uses a substance in a closed circuit as a working fluid which can be vaporised by the vaporiser or vaporisers (21a, 21b) which are used as the heat sources.

5. Plant in accordance with any one of the claims 1 to 4 **characterised in that** at least the intermediate vaporiser (20b) is executed as a falling film vaporiser.

6. Plant in accordance with any one of the claims 1 to 5 **characterised in that** the first vaporiser (20a) is executed as a natural circulation vaporiser, a climbing film vaporiser or a rising tube vaporiser.

7. Plant in accordance with any one of the claims 1 to 6 **characterised in that** the packings (230, 240, 250, 250a, 250b) or packing sections are structured in an ordered manner and have in particular vertical layers with corrugated lamella.

8. Plant in accordance with any one of the claims 1 to 7 **characterised in that** a supply line for a raw product (F) with a distributor (203) is arranged above the intermediate vaporiser or an intermediate vaporiser (20b), wherein a further packing section (230) can be arranged between the distributor and the intermediate vaporiser.

9. Use of a plant (1) in accordance with one of the claims 1 to 8 for the production of concentrated hydrogen peroxide H₂O₂, in particular for the manufacture of a product solution (P) which contains about 70 % H₂O₂, from a raw solution (F) which contains about 30 % H₂O₂.

## Revendications

1. Installation de distillation (1) avec une pompe à chaleur et avec une colonne comportant des empilements (240, 250) ainsi qu'un évaporateur (20a), dont les composants - disposés sur un axe vertical et regroupés en unité structurelle - sont configurés de telle sorte que, lors du fonctionnement de l'installation, une différence de pression plus faible se crée entre un bac de décantation (24) et une tête (25) de la colonne,
**caractérisée en ce qu'**au moins deux évaporateurs (20a, 20b) sont prévus, notamment un premier évaporateur (20a) disposé dans ou directement au-dessus du bac de décantation et un évaporateur intermédiaire (20b) disposé au-dessus du premier évaporateur et d'une section à garniture inférieure (240) ; et/ou
**en ce qu'**au moins deux liquéfacteurs (21a, 21b) sont prévus, notamment un premier liquéfacteur (21a) disposé dans la tête de la colonne et un liquéfacteur intermédiaire (21b) disposé en dessous du premier liquéfacteur et d'une section à garniture supérieure (250a),
les évaporateurs et/ou liquéfacteurs mentionnés étant des composants de la pompe à chaleur (25, 6, 20a, 20b ; 21a, 21b, 6, 20), la pompe à chaleur réalisant une liaison de transport ainsi que de transformation thermique (200, 72, 62a, 62b) entre la tête (25) et le bac de décantation (24), la pompe à chaleur comportant au moins deux étages (6a, 20a / 6b, 20b ; 6, 21a, 21b), le premier évaporateur (20a) et l'évaporateur intermédiaire (20b) constituant des dissipateurs thermiques de la pompe à chaleur sur deux niveaux de température et/ou le premier liquéfacteur (21b) et le liquéfacteur intermédiaire (21b) constituant des sources de chaleur de la pompe à chaleur sur deux niveaux de température.

2. Installation selon la revendication 1, **caractérisée en ce que** la pompe à chaleur comprend un compresseur (6) à au moins deux étages et utilise un fluide de travail qui peut être condensé après une compression de vapeur au niveau de température du(des) évaporateur(s) (20 ; 20a, 20b), un compresseur radial à deux étages (6a, 6b, 61) étant prévu en tant que compresseur.

3. Installation selon la revendication 2, **caractérisée en ce que** les vapeurs pouvant être récupérées à la tête (25) de la colonne (2) servent de fluide de travail.

4. Installation selon la revendication 2, **caractérisée en ce que** la pompe à chaleur (21a, 21b, 6, 20) utilise comme fluide de travail, dans un circuit fermé, une matière qui peut être vaporisée à l'aide du ou des liquéfacteur(s) (21a, 21b) utilisé(s) en tant que source(s) de chaleur ;

5. Installation selon l'une des revendications 1 à 4, **caractérisée en ce qu'**au moins l'évaporateur intermédiaire (20b) est conçu comme évaporateur à film tombant.

6. Installation selon l'une des revendications 1 à 5, **caractérisée en ce que** le premier évaporateur (20a) est conçu comme évaporateur à circulation naturelle, à couche montante ou à tube vertical.

7. Installation selon l'une des revendications 1 à 6, **caractérisée en ce que** les empilements (230, 240, 250, 250a, 250b) ou sections à garniture sont structurées de manière ordonnée et comportent en particulier des rangées verticales de lamelles ondulées.

8. Installation selon l'une des revendications 1 à 7, **caractérisée en ce qu'**une alimentation pour un produit brut (F), avec un distributeur (203) est disposée au-dessus de l'(d'un) évaporateur intermédiaire (20b), une autre section à garniture (230) pouvant être située entre le distributeur et l'évaporateur intermédiaire.

9. Utilisation d'une installation (1) selon l'une des revendications 1 à 8 pour la fabrication de peroxyde d'hydrogène concentré H₂O₂, en particulier pour la fabrication d'une solution produit (P) contenant environ 70% de H₂O₂ à partir d'une solution brute (F) contenant environ 30% de H₂O₂.
